# EUROPEAN PATENT APPLICATION

(11) **EP 1 380 376 A1**
(43) Date of publication of application: **14.01.2004**
(21) Application number: 01274099.9
(22) Date of filing: 07.12.2001
(51) Int. Cl.: B23D 61/02, B27B 5/32, B27B 33/08

(54) **CIRCULAR SAW AND METHOD FOR FIXING MAIN SPINDLE THEREOF**

(30) Priority: 30.03.2001 JP 2001101900
(71) Applicant: KANEFUSA KABUSHIKI KAISHA, Niwa-gun, Aichi 480-0192 (JP)
(72) Inventor: NISHIO, Satoru, Kanefusa Kabushiki Kaisha, Niwa-gun, Aichi 480-0192 (JP); NAKAJIMA, Yasutaka, Kanefusa Kabushiki Kaisha, Niwa-gun, Aichi 480-0192 (JP); IDE, Tsuyoshi, Kanefusa Kabushiki Kaisha, Niwa-gun, Aichi 480-0192 (JP)
(74) Representative: Modiano, Guido, Dr.-Ing.
(86) International application number: PCT/JP2001/010770
(87) International publication number: WO 2002/081136

(57) **Abstract**

To eliminate a drawback of the prior art that reduction of the thickness of a circular saw lowers the critical rotational speed of the circular saw, making the buckling phenomenon more likely to occur, there are provided a construction of a circular saw which makes it possible to prevent the critical rotational speed of the circular saw from being lowered due to reduction of the thickness of the circular saw, and increase the critical rotational speed to twice the speed of a conventional circular saw, and a method of fixing the same to a main rotary spindle. More than two slits are formed in a body formed with a central hole, such that the more than two slits extend directly from the central hole or from the vicinity of the central hole, at predetermined intervals of angles about a center of the circular saw, and terminate at respective locations within an annular range set to 60% to 75% of the tooth bottom radius of the circular saw. Further, the circular saw is fixed to the main rotary spindle such that the circular saw is sandwiched between a pair of flanges provided on the main rotary spindle such that movements of the body of the circular saw in a direction of thickness and in a direction of rotation are restrained, but radial increase and decrease in size of the body caused by expansion and contraction of the body is allowed. Thus, the above problem is solved.

## Description

### TECHNICAL FIELD TO WHICH THE INVENTION BELONGS

This invention relates to a circular saw and a method of fixing the same to a main rotary spindle, and more particularly to an improved circular saw capable of dramatically increasing a critical rotational speed for cutting operation even with a base metal of the circular saw being made thin, and a method of fixing the same to a main rotary spindle.

### PRIOR ART

Various kinds of cutting devices and apparatuses employ a circular saw having a large number of saw teeth attached to the outer periphery of a disk-shaped base metal (hereinafter referred to as "the body") thereof formed with a central hole in the central portion thereof. This type of circular saw is put to practical use in a state mounted in a cutting device or apparatus. More specifically, it is conventionally a common technique of fixing the circular saw to a main rotary spindle of a cutting device or apparatus to insert the main spindle through the central hole of the circular saw, and then firmly sandwich the body of the circular saw between a pair of flanges fitted on the main spindle. In general, the body of a circular saw tends to be radially expanded or enlarged by a low order of magnitude due to frictional heat generated during cutting of a workpiece, for example, of wood or non-ferrous metal material, and centrifugal force acting on the circular saw, particularly on a portion of the circular saw close to the outer periphery thereof during high-speed rotation of the circular saw. Actually, however, since the circular saw is firmly sandwiched between the flanges on the main spindle, the radial expansion of the body of the circular saw is restrained by the flanges. It should be noted that the influence of the flanges firmly sandwiching the circular saw is exerted not only on an annular portion of the circular saw in contact with the flanges, but also on a portion of the circular saw spreading radially outward from the annular portion, and hence expansion of the outer peripheral portion is also restrained.

### PROBLEM TO BE SOLVED BY THE INVENTION

In a field employing, for example, a gang-ripping method of splitting a plate material or the like by using a plurality of circular saws mounted on a single main rotary spindle at predetermined spaced intervals, it is desired to minimize the width of cuts formed by passing of the circular saws, for yield enhancement and reduced production of sawdust, thereby achieving effective utilization of resources. Further, reduction of electric power used by a motor for driving a circular saw cutting device or apparatus and reduction of noise generated by cutting operation are also hoped for. These demands can be suitably satisfied by reducing the thickness of the circular saw.

However, if reduction of the thickness of the circular saw is promoted, rigidity of the body of the circular saw is sharply lowered relatively, and hence the operating speed of rotation of the circular saw reaches a critical rotational speed, which will be described later, whereby the operating speed of rotation of the circular saw is limited to a low level. Further, as the circular saw is made thinner, the temperature of the outer peripheral portion of the body is increased due to friction produced during cutting of a workpiece. As a result, the critical rotational speed is sharply reduced, which makes the body of the circular saw prone to buckling. For these reasons, it is practically difficult to further reduce the present thickness of the circular saw having substantially reached a technical limit.

As described hereinbefore, when the circular saw fixed to the main spindle is rotated at a high speed, the outer peripheral portion of the body is influenced by centrifugal force and urged to expand in a circumferential direction. On the other hand, since the inner peripheral area of the body is firmly sandwiched between the flanges, radial increase and decrease in size of the body is restrained. However, circumferential expansion of the outer peripheral portion of the circular saw is increased with an increase in the rotational speed of the circular saw. As a result, when the rotational speed of the circular saw reaches a predetermined speed, lateral rigidity of the body is extremely reduced in a predetermined vibration mode specific to the base metal, causing a so-called buckling phenomenon. The rotational speed at this limit is referred to as a critical rotational speed, and if the rotational speed exceeds the limit, the body of the circular saw swings (buckles) laterally during cutting of a workpiece, thereby forming a defective cut surface, or causing breakage of the circular saw or other inconveniences.

Even when the circular saw is being operated below the critical rotational speed, due to frictional heat generated during cutting of a workpiece, and an increase in the frictional heat caused by sawdust remaining between a cut surface of the workpiece and the body of the circular saw, it often occurs that an increase in the temperature of the outer peripheral portion of the body becomes remarkably larger than an increase in the temperature of the inner peripheral portion of the same. When the temperature of the outer peripheral portion of the body sharply rises, the outer peripheral portion circumferentially expands relative to the inner peripheral portion of the body, which lowers the critical rotational speed of the circular saw, eventually causing the buckling phenomenon, such as the swinging of the body.

As described above, a circular saw has a critical rotational speed determined based on the diameter and thickness of a body thereof, the Young's modulus of a component material, the diameter of flanges, and so forth, and hence, in general, a circular saw is actually operated at a rotational speed equal to or lower than 85% of a critical rotational speed specific to the circular saw. Therefore, it is considered that the critical rotational speed can be increased by changing the above factors. Actually, however, a circular saw is formed of a tool steel or the like having a high Young's modulus, and the diameters of a circular saw and flanges are optimally determined based on the thickness of a material to be cut, and hence it can be said that the above factors are virtually constant. The yield and reduction of the amount of sawdust depend on the thickness of saw teeth attached to the outer circumferential area of a circular saw, and therefore, after all, it is necessary to make the body of the circular saw thinner so as to reduce the thickness of the saw teeth. However, when the thickness of the body is reduced, the bottleneck problem comes to the surface that the critical rotational speed of the circular saw is relatively lowered, and the buckling phenomenon is more likely to occur, as described hereinabove.

### OBJECT OF THE INVENTION

The present invention has been made in view of the drawback of the prior art that reduction of the thickness of a circular saw lowers the critical rotational speed of the circular saw, and makes the buckling phenomenon more likely to occur, so as to provide an appropriate solution to this problem, and an object of the invention is to provide a construction of a circular saw which makes it possible to prevent the critical rotational speed of the circular saw from being lowered due to reduction of the thickness of the circular saw and increase the critical rotational speed to twice the speed of a conventional circular saw, and a method of fixing the same to a main rotary spindle.

### MEANS FOR SOLVING THE PROBLEM

To solve the above problem and attain the above object, in a first aspect of the present invention, there is provided a circular saw, wherein more than two slits are formed in a body formed with a central hole, such that the more than two slits radially extend from the central hole or from the vicinity of the central hole, at predetermined intervals of angles about a center of the circular saw, and terminate at respective locations within an annular range set to 60% to 75% of a tooth bottom radius of the circular saw.

To solve the above problem and attain the above object, in a second aspect of the present invention, there is provided a method of fixing a circular saw to a main rotary spindle, the circular saw having more than two slits formed in a body formed with a central hole, such that the more than two slits extend directly from the central hole or from the vicinity of the central hole, at predetermined intervals of angles about a center of the circular saw, and terminate at respective locations within an annular range set to 60% to 75% of a tooth bottom radius of the circular saw, wherein the circular saw is sandwiched between a pair of flanges provided on the main rotary spindle such that movements of the body of the circular saw in a direction of thickness and in a direction of rotation are restrained, but radial increase and decrease in size of the body caused by expansion and contraction of the body is allowed.

### BRIEF DESCRIPTION OF THE DRAWINGS

FIG. 1 is a front view of a circular saw according to an embodiment of the present invention;
FIG. 2 is a front view of a circular saw according to another embodiment of the present invention;
FIG. 3 is a front view of a circular saw according to another embodiment of the present invention;
FIG. 4 is a cross-sectional view schematically showing a flange structure for removably fixing a circular saw to a main rotary spindle;
FIG. 5 is a graph showing the relationship between a dimensionless length ε set to two slits formed in a circular saw and a critical rotational speed;
FIG. 6 is a graph showing the relationship between a dimensionless length ε set to three slits formed in a circular saw and a critical rotational speed;
FIG. 7 is a graph showing the relationship between a dimensionless length ε set to eight slits formed in a circular saw and a critical rotational speed;
FIG. 8 is a graph showing the relationship between the number of slits formed in a circular saw and the optimal length of the slits; and
FIG. 9 is a graph showing the relationship between a dimensionless length ε set to eight slits formed in a circular saw and a critical rotational speed, in which it is shown that even when the shape of each slit is changed to a shape of a curved line, there is almost no change in the critical rotational speed.

### MODE FOR CARRYING OUT THE INVENTION

Next, a circular saw and a method of fixing the same to a main spindle according to the invention will be described based on preferred embodiments thereof with reference to the drawings. The circular saw has a fixed constant critical rotational speed specific thereto, as described hereinbefore, and hence if the circular saw is operated at a rotational speed exceeding the critical rotational speed, a buckling phenomenon eventually occurs. Therefore, if it is possible to increase the critical rotational speed of a circular saw by any means, it is expected that the circular saw can achieve cutting operation at a higher rotational speed than ever without causing the buckling phenomenon. In view of this, after considering factors affecting the critical rotational speed from various viewpoints, the present inventor focused on the fact that in a circular saw rotating at a high speed, the outer peripheral portion of the body thereof is urged to circumferentially expand, but that flanges rigidly holding the inner peripheral portion of the body restrain the body from radially expanding.

Based on this finding, in fixing a circular saw to a main rotary spindle with a pair of flanges fitted on the main rotary spindle, the inventor put the circular saw to use in a state in which that movements of the body of the circular saw in the direction of thickness and in the direction of rotation were restrained, but radial increase and decrease in the size of the body caused by the expansion and contraction of the body was allowed. However, an expected increase in the critical rotational speed was not obtained. Next, the inventor, who was considerably confident of usefulness of the finding, tried the above fixing method while changing the shape of the body of the circular saw variously. As a consequence, when the inventor prototyped a circular saw by forming, in a body formed with a central hole, more than two slits, such that they extend directly from the central hole or from the vicinity of the central hole (e.g. locations 0.5 to 5 mm radially distant from the central hole), at predetermined intervals of angles about the center thereof, and terminate at locations within an annular range set to 60% to 75% of the tooth bottom radius of the circular saw, and put the circular saw to service by fixing the same to the main rotary spindle by the above fixing method, it was found that the critical rotational speed can be dramatically increased.

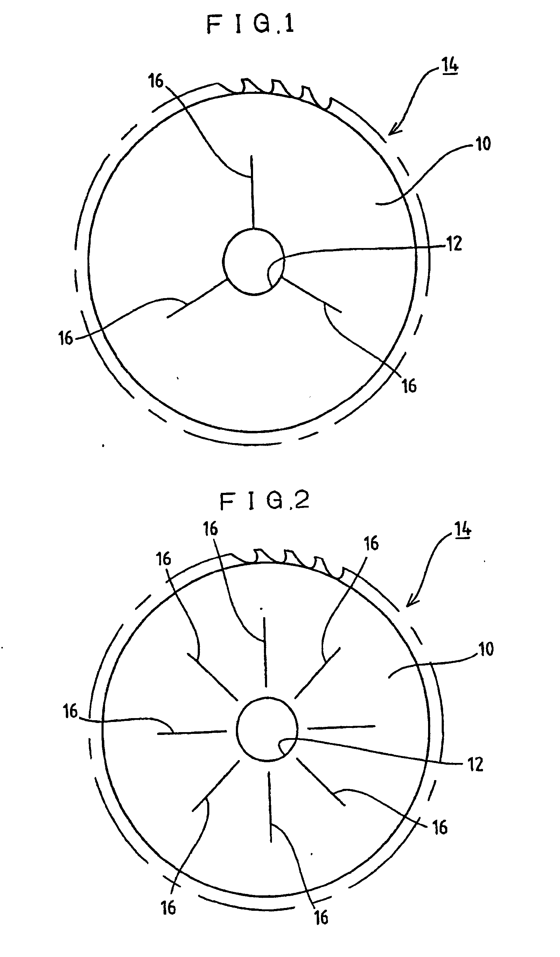

FIG. 1 is a front view of a circular saw 14 having a body 10 thereof formed with a central hole 12 and three linear slits 16 radially extending from the central hole 12 at intervals of angels of 120 degrees about the center thereof. The slits are configured to terminate at locations within an annular range set to 60% to 75% of the tooth bottom radius of the circular saw 14 based on the results of analysis described in detail hereinafter. In this connection, it is recommended that each of slits 16 is formed by the technique of linearly applying a laser beam onto a portion of the body 10 where the slit is to be formed, to heat the portion to a high temperature, and then quenching the portion to thereby produce a crack, but this is not limitative. Further, if the slits 16 are formed by a different method from the laser crack method described above, cuttings are apt to lodge in the slits 16, and hence it is preferred that the slits 16 are filled with a thermosetting resin or the like.

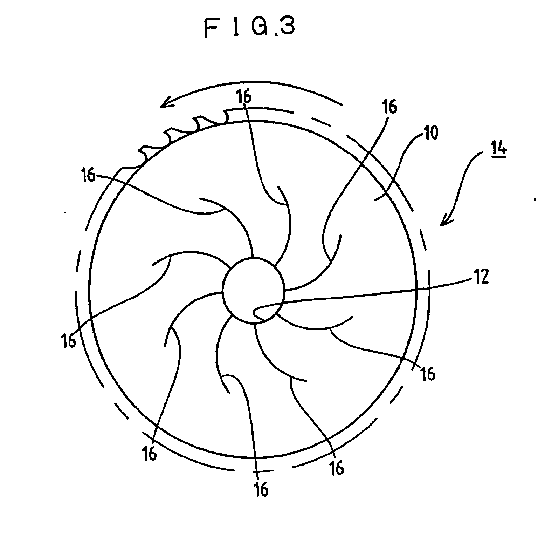

FIG. 2 is a front view of a circular saw 14 according to another embodiment of the invention. In the circular saw 14, eight slits 16 radially extend from the vicinity of a central hole 12, for example, from respective locations 0.5 to 5 mm radially distant from the central hole 12 (not directly from the central hole 12) at intervals of angles of 45 degrees about the center thereof. Each of the slits 16 of a circular saw 14 shown in FIG. 3 form an arcuate curve expanded in a direction opposite to a direction of rotation of the circular saw 14. In both of FIGS. 2 and 3, the respective slits 16 are configured to terminate at locations within an annular range set to 60% to 75% of the tooth bottom radius of the circular saw 14.

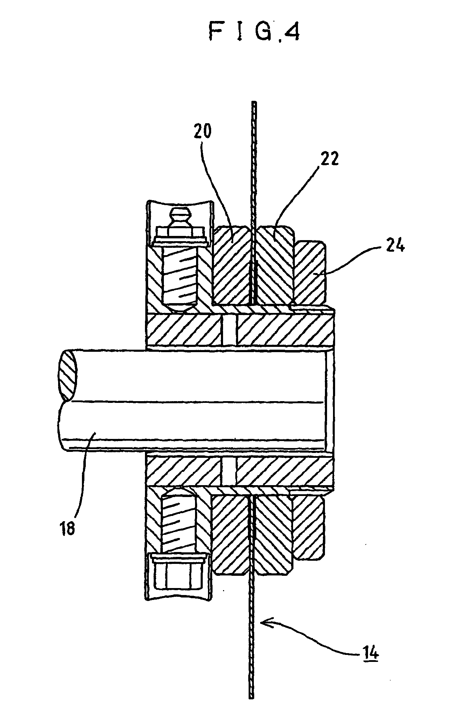

FIG. 4 is a cross-sectional view schematically showing a flange structure for removably fixing the circular saw 14 to a main rotary spindle 18. More specifically, the pair of flanges 20, 22 are coaxially fitted on the main rotary spindle 18, and the fixing of the circular saw 14 to the main rotary spindle 18 is achieved by tightening a nut 24 illustrated in FIG. 4 in a state in which the central hole 12 of the circular saw 14 is fitted on the main rotary spindle 18, thereby sandwiching the circular saw 14 by the two flanges 20, 22. In this case, a force (tightening torque) for sandwiching the main rotary spindle 18 by the two flanges 20, 22 is set such that movements of the body 10 of the circular saw 14 in the direction of thickness and in the direction of rotation are restrained, but radial increase and decrease in the size of the body caused by the expansion and contraction thereof is such a degree as to be allowed. More specifically, tightening of the nut 24 is performed manually so as to tighten the nut 24 slightly less firmly than in the prior art in which a tool, such as a spanner, is used for tightening the nut.

To set the force for sandwiching the circular saw 14 by the two flanges 20, 22, such that (1) movements of the body 10 in the direction of thickness and in the direction of rotation are restrained, but (2) radial increase and decrease in the size of the body 10 caused by the expansion and contraction thereof is allowed, the above-mentioned manual tightening method may be employed, but this method is apt to cause variations in the resulting force, and hence repeatability and reproducibility cannot be ensured. To overcome this problem, it is preferred that the tightening operation is performed mechanically or electrically to thereby accurately reproduce the amount of tightening of the flanges against the circular saw 14. For example, the technique of controlling tightening torque by using a torque wrench or by adjusting the magnetic attractive force of an electromagnet or the amount of oil to be supplied to a hydraulic motor can easily achieve the accurate reproduction of the tightening amount of the flanges.

Furthermore specifically, a method is proposed in which a mechanism for controlling the tightening amount of the flanges based on required torque is incorporated into the flanges, and the tightening torque (or thrust load) is controlled such that the body of the circular saw slips relative to the flanges when the rotational speed of the circular saw has reached an operating speed of rotation. When an electromagnet or a hydraulic motor is used to control the tightening torque, it suffices to increase the tightening amount of the flanges as required only when the rotational speed of the circular saw has reached the operating speed of rotation. It should be noted that application of lubricating oil onto the surface of the body (base metal) of the circular saw or coating of the surface of the body with a fluororesin film makes it possible to increase the thrust force when the flanges are tightened as well as lateral rigidity of a flange portion of the body. Further, restraint on movement of the body in the direction of rotation can be achieved more reliably by using a detent key, not shown, or a detent pin, not shown.

Analyses were performed on the appropriate number of slits 16 on the circular saw 14 and the appropriate length of each slit 16.

### 1. Model for Analyses

Dimensions of a body (base metal): tooth bottom diameter of 280 mm; thickness of 0.9 mm; inner diameter of a central hole of 52 mm

Dimension of flanges: diameter of 90 mm

Conditions for restraint: Movement in the thickness direction was restrained by flanges within a diametrical range of 52 mm to 90 mm, but radial movement was allowed.

Length of slits: Each slit was formed to extend linearly in a radial direction from the central hole (inner diameter of 52 mm) and have a length L mm from the center of the circular saw.

### 2. Results of Analyses

The number of slits radially extending from the central hole of the circular saw at predetermined intervals of angles about the center was set to two, three and eight. The relationship between a dimensionless length ε of a slit and a critical rotational speed (Ncr) are shown FIGS. 5 to 7, in an associated manner. In each of these figures, the ordinates indicates the critical rotational speed Ncr, while the abscissas indicates the dimensionless length ε. In this model, ε = 2·L/D, wherein L represents the length of a slit from the center of a circular saw, and D the tooth bottom diameter of the circular saw (in mm). Further, in FIGS. 5 to 7, the mark "●" indicates "mode (nodal diameter number) 0", the mark "▲" indicates "mode 1", the mark "○" indicates "mode 2", the mark "Δ" indicates "mode 3", and the mark "□" indicates "mode 4".

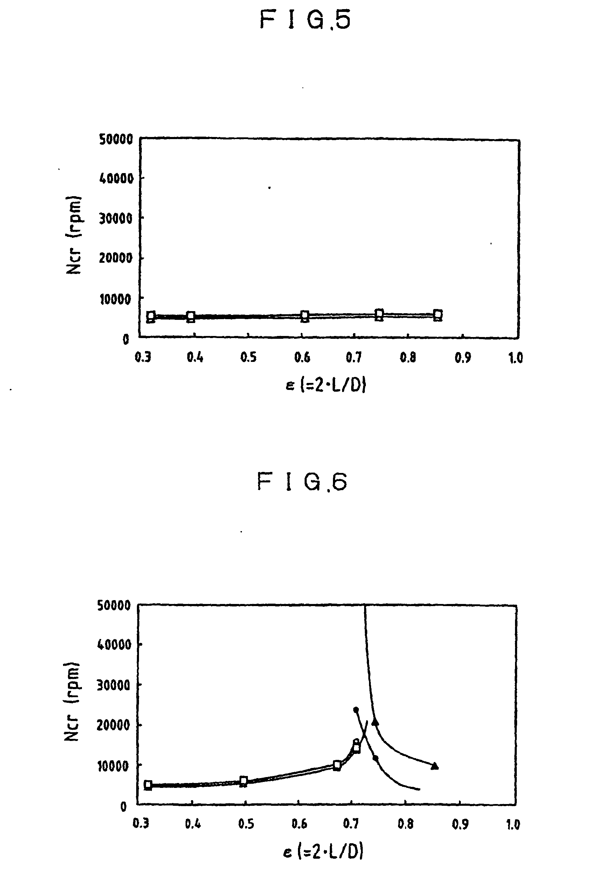

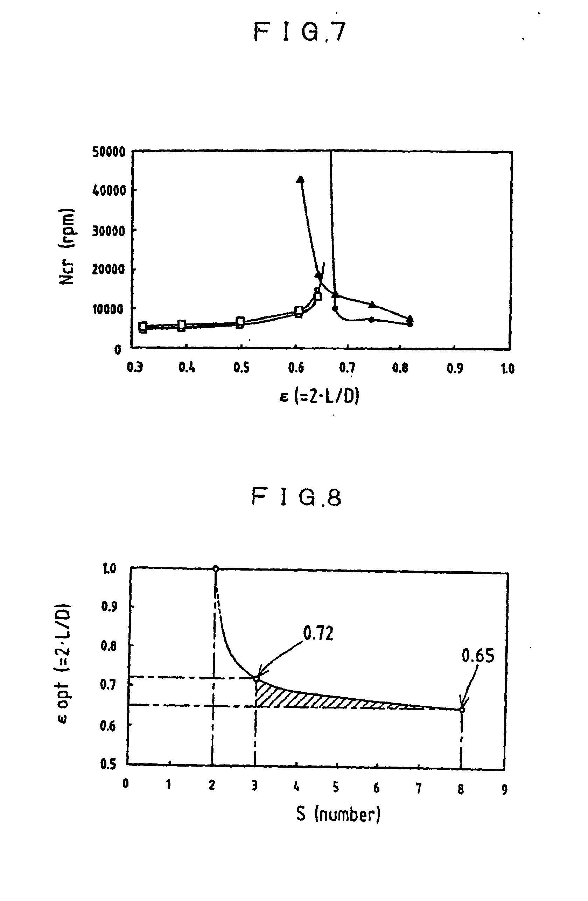

In the FIG. 5 case where two slits were formed, even though the dimensionless slit length ε was changed, there was only a slight increase in the critical rotational speed Ncr. On the other hand, in the FIG. 6 case where three slits were formed, there existed an optimal slit length for maximizing the critical rotational speed Ncr, and the dimensionless length ε existed close to 0.72. Further, in the FIG. 7 case where eight slits were formed, an optimal slit length ε for maximizing the critical rotational speed Ncr existed close to 0.65. That is, it was proved that when more than two slits are formed on a circular saw, the slits have an optimal dimensionless length ε for maximizing the critical rotational speed Ncr.

Next, the relationship between the number of slits to be formed on a circular saw and the dimensionless length ε of the slits is shown in FIG. 8. The ordinate indicates the optimal slit length ε, while the abscissa indicates the number S of the slits. FIG. 8 shows that as the number of slits is increased, the optimal length ε of the slits is reduced. When two slits are provided, for example, the lowest critical rotational speed is only slightly increased if the above-mentioned ε is increased. In this case, although not practical, the optimal length ε can be considered to be 1. When the number of the slits is increased to three, the optimal length ε sharply drops to approximately 0.72 as indicated by a curve in the FIG. 8 graph, and then the curve shows gentle and progressive decrease in the optimal length ε to approximately a value of 0.65 obtained when eight slits are formed. In short, when three slits were provided, the optimal length ε was approximately 0.72, while when there were provided eight slits, the optimal length ε was approximately 0.65. The optimal range for the number of slits and the slit length is indicated by a diagonally shaded area appearing in FIG. 8. It should be noted that in the present analysis, the optimal length ε was examined not based on the outer diameter (saw diameter) of a circular saw, but based on a diameter (tooth bottom diameter) extending from one tooth bottom to a diametrically opposite tooth bottom of the circular saw. The fact that the optimal length ε is more dependent on the tooth bottom diameter than the saw diameter has been confirmed by examining the optimal length ε while changing the tooth shape of the circular saw.

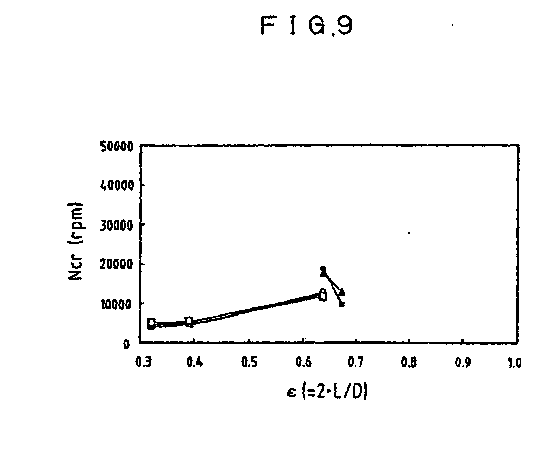

The examples shown in FIGS. 5 to 7 were distinguished from each other by the number of slits, but similar to each other in that the slits were each formed to have a linear shape. Therefore, the shape of slits was changed to the arcuate shape seen in FIG. 3, thereafter a critical rotational speed Ncr with respect to the dimensionless length ε was measured. In this example, the number of the slits is set to eight. As a result, as shown in FIG. 9, the relationship between the critical rotational speed Ncr and the dimensionless length ε was basically not very different from that in FIG. 7 (the case where a circular saw is formed with eight linear slits), and hence it was proved that even when the shape of the eight slits is changed to a shape of a curved line, the critical rotational speed Ncr hardly differs from that of the circular saw formed with eight linear slits. It should be noted that also in FIG. 9, the mark "●" indicates "mode (nodal diameter number) 0", the mark "▲" indicates "mode 1", the mark "○" indicates "mode 2", the mark "Δ" indicates "mode 3", and the mark "□" indicates "mode 4". Further, a mechanism for radially expanding the main rotary spindle may be employed to radially pressurize the circular saw from the central hole, thereby promoting expansion of the outer periphery of the circular saw to increase the rigidity of the body (base metal) of the circular saw.

### EFFECTS OF THE INVENTION

As described above, the circular saw and the method of fixing the same to the main spindle, according to the present invention, have overcome the drawback of the prior art that reduction of the thickness of a circular saw lowers the critical rotational speed of the circular saw, making the buckling phenomenon more likely to occur, and make it possible to prevent the critical rotational speed of a circular saw from being lowered due to reduction of the thickness of the circular saw, or rather increase the critical rotational speed to twice the speed of a conventional circular saw. Therefore, in a field employing, for example, the gang-ripping method of splitting a plate material or the like by using a plurality of circular saws, it is possible to minimize the width of cuts formed by passage of the circular saws, for yield enhancement and reduced production of sawdust, thereby achieving effective utilization of resources. Further, the present invention provides excellent effects of reducing the driving force of a circular saw cutting device, noise generated by cutting operation, and cutting time.

## Claims

1. A circular saw, wherein more than two slits are formed in a body formed with a central hole, such that the more than two slits radially extend from the central hole or from the vicinity of the central hole, at predetermined intervals of angles about a center of the circular saw, and terminate at respective locations within an annular range set to 60% to 75% of a tooth bottom radius of the circular saw.

2. A method of fixing a circular saw to a main rotary spindle, the circular saw having more than two slits formed in a body formed with a central hole, such that the more than two slits radially extend from the central hole or from the vicinity of the central hole, at predetermined intervals of angles about a center of the circular saw, and terminate at respective locations within an annular range set to 60% to 75% of a tooth bottom radius of the circular saw, wherein the circular saw is sandwiched between a pair of flanges provided on the main rotary spindle such that movements of the body of the circular saw in a direction of thickness and in a direction of rotation are restrained, but radial increase and decrease in size of the body caused by expansion and contraction of the body is allowed.

3. The method according to claim 2, wherein the circular saw is sandwiched between the pair of flanges in a manner such that the increase and decrease in size of the body is temporarily restrained, as required, during cutting of a workpiece.
